(19) 
**Europäisches Patentamt**
**European Patent Office**
**Office européen des brevets**

(11) **EP 3 409 113 A1**

(12) **EUROPEAN PATENT APPLICATION**

(43) Date of publication:
**05.12.2018 Bulletin 2018/49**

(51) Int Cl.:
*A01N 25/12* (2006.01)   *A01N 37/12* (2006.01)
*A01N 65/00* (2009.01)   *A01N 63/00* (2006.01)
*A01N 65/08* (2009.01)   *A01P 1/00* (2006.01)

(21) Application number: **17174344.6**

(22) Date of filing: **02.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Schepers, Klaus**
**35619 Braunfels (DE)**

(72) Inventor: **Schepers, Klaus**
**35619 Braunfels (DE)**

(74) Representative: **Kalhammer, Georg et al**
**Lederer & Keller**
**Patentanwälte Partnerschaft mbB**
**Unsöldstrasse 2**
**80538 München (DE)**

(54) **USE OF A NATURAL OIL IN POLYMERS FOR DISINFECTING PURPOSES**

(57)   The present invention relates to the use of a natural oil for disinfecting purposes. In particular it relates to the use of the natural oil incorporated into a polymer matrix for disinfecting purposes in antimicrobial surfaces, paints or coatings.

EP 3 409 113 A1

**Description**

The present invention relates to the use of a natural oil for disinfecting purposes. In particular it relates to the use of the natural oil incorporated into a polymer matrix for disinfecting purposes in antimicrobial surfaces, paints or coatings.

In many industrial and domestic processes waste water is produced or fresh water is to be stored for later purposes. As essentially all water sources provide non-sterile water, in fresh water and in particular in waste water there is the risk of microbiological contamination during storage or processing.

Many ways are known in the art to avoid creation of microbiological contaminations, in particular biofilms, in containers for the storage of drinking water, waste water, surface water or similar liquids. Further, several methods are known to avoid microbiological contamination of surfaces, e.g. in hospitals or slaughterhouses. For example, usually the surfaces of containers are cleaned by heat treatment, e.g. by rinsing the surfaces or containers with hot liquids or gases, e.g. hot water or steam. Further, treatment by ozone or chlorine containing gases is known for disinfecting surfaces and containers and cleaning and removal of organic contaminations.

It is also known to apply ultraviolet (UV-) radiation to disinfect surfaces, containers, and even liquids. It is also known to add certain substances to the liquids, such as titanium dioxide, or to apply titanium dioxide to a surface for disinfecting or cleaning purposes. However, these surfaces and substances require UV-radiation for activating the disinfecting efficacy of titanium dioxide.

Further, it is known to apply silver ions or copper ions to solutions in order to reduce the microbiological contamination.

All these measures and procedures are disadvantageous as they waste a lot of energy, require high apparatus cost and costs of operation in order to be sufficiently effective, or rather expensive substances, such as silver ions or copper ions, have to be used, the latter having further disadvantages with regard to water and soil pollution. Further, using substances which are dangerous to handle, e.g. ozone or chlorine containing substances, as well as ultraviolet radiation, is disadvantageous and requires additional safety measures.

In recent years the use of natural products to address problems in the environment, waste disposal, depletion of non-renewable resources and safe handling becomes more and more important.

It is known from cosmetic and pharmaceutical applications that natural oils, which include as main component glycerine esters with fatty acid residues, also indicated as glycerides, show antimicrobial effects. In various studies, the role of these glycerine esters, in particular of the fatty acid residues, with respect to the antimicrobial effect have been investigated.

For example, in "Alternative & Complementary Therapies", December 2006, pages 310-314, Lieberman et al., or in "Inform", June 2014, vol. 25 (6), pages 390-393, Kaß et al. show that glycerine esters with fatty acid residues having a short carbon chain length, such as residues of caprylic acid, caprice acid, lauric acid or myristic acid, exhibit better antimicrobial efficacy against bacteria than glycerine esters with fatty acid residues having a long carbon chain length. Moreover, according to these studies, monoesters of glycerine with fatty acid residues show a better effect than the corresponding di- or tri-glycerine esters, which are the main components of the natural oils.

In accordance with these studies, WO 00/71183 discloses that glycerine monoester with fatty acid residues having a chain length of $C_8$ to $C_{12}$ carbon atoms in combination with an enhancer shows an antimicrobial effect on dry or essential dry articles.

It is also known that certain natural oils show antimicrobial effects if they are directly applied to the bacteria. This is for example described by A-Mathkhury et al. in Iraqi Journal of Science, 2016, Vol. 57, No. 2B, pages 1086-1095, who refer to the antimicrobial activity of flaxseed oil. In this study the oil is directly applied to wounds caused by bacteria or to the isolated bacteria.

However, in order to avoid microbiological contaminations, in particular biofilms, in containers for the storage of drinking water, waste water, surface water or similar liquids, it is not possible to apply the natural oil directly to the water, especially to drinking water, or to the surface of the container.

Hence, there is still a need for further compounds and compositions, which exhibit antimicrobial and in particular antibacterial activity and which can preferably provide antimicrobial and in particular antibacterial properties to at least part of a surface of a polymer and thus are suitable for disinfection proposes as described above.

It has been surprisingly found that a natural oil alone that comprises a sufficient amount of fatty acid residues having 15 carbon atoms or more and which is incorporated into a polymer matrix provides excellent antimicrobial efficiency to the surface of this polymer, when the polymer is in contact with liquids, in particular with drinking and waste water, and thereby avoids microbiological contamination of surfaces of the polymer and of the liquid and leads to a reduction of biofilm formation. Thus, there is no need to use additional external or internal biocides.It was surprising that the natural oil despite its incorporation into a polymer exhibits antimicrobial activity.

Therefore, the present invention relates, in a first aspect, to the use of a natural oil for providing antimicrobial properties to at least part of a surface of a polymer wherein the natural oil is incorporated into the polymer matrix and comprises at least 25 wt.-% of fatty acid residues having at least 15 carbon atoms, based on the total weight of fatty acids present in the natural oil. All embodiments described hereinafter apply to this first aspect.

In a second aspect the invention relates to the use of a natural oil for providing antimicrobial properties to at least part of a surface of a polymer wherein the natural oil is incorporated into the polymer matrix and characterized by a saponification value of 100 to 240, preferably of 125 to 220, more preferably of 150 to 210, most preferably between 180 and 200 (e.g. from 185 to 196). All embodiments described hereinafter are applicable to this second aspect *mutatis mutandis.*

Applicants do not wish to be bound to any theory, but it is believed that the natural oil itself exhibits an antimicrobial and in particular antibacterial effect due to interaction between the long carbon chains of the hydrophobic fatty acid residues present in the oil and the cell membranes of for example bacteria contacting the surface of the polymer. In particular, it is assumed that the natural oil is incorporated into the polymer matrix such that the glycerine esters, as described herein, migrate to the surface of the polymer and thus an anti-microbial effect can be obtained on said surface. Natural oils mainly comprise triglycerides which show a lower water-solubility than mono- or diglycerides. Thus, without binding to any theory, it is assumed that the triglycerides having long carbon chains of the natural oil used in the invention cannot be washed out of the polymer matrix by water. This results in a longer antimicrobial effect of the polymer including the natural oil.

The obtained effect can be characterized by the ability to deter, render harmless, destroy and/or exert a controlling effect on all forms and/or parts of microbial life (e.g. bacteria, viruses, fungi, spore forms, etc.); and/or by the ability to remove and/or reduce offensive and/or unpleasant scents.

The ability to kill microorganisms results in disinfecting, antifouling, self-sanitizing and and/or biocidal effects. In this context "antifouling" refers to the ability to prevent or remove biofouling on wetted surfaces. Biofouling is the accumulation of microorganisms, plants, algae or animals on wetted surfaces and killing such microorganisms, including algae, supports the prevention or removal of biofouling.

The term "antimicrobial", as used herein, refers to the ability of the natural oil or any other compound as described herein to kill microorganisms.

The term "microorganism", as referred to herein, includes bacteria, viruses, fungi and algae. Preferably, the term "microorganism", as used herein, refers to bacteria.

As mentioned above, it has been surprisingly found that the content of the fatty residues having 15 or more carbon atoms present in the natural oil of the invention must be high enough in order to obtain an antimicrobial effect on the surface of the polymer.

For example, coconut oil contains fatty acid residues having 15 carbon atoms or more only in a low amount (approximately 22 to 23 wt.-% based on the total weight of fatty acids present in the oil) but contains a comparably high amount of fatty acid residues having $C_8$ - $C_{12}$ carbon atoms (approximately 60 to 65 wt.-% based on the total weight of fatty acids present in the oil).

As mentioned above, in various studies it has been demonstrated that fatty acid residues show an excellent antimicrobial effect in case the carbon chain length of the fatty acid and residue thereof is between $C_8$ - $C_{12}$. Hence, according to these studies, coconut oil seems to be a good candidate for the development of an antimicrobial agent according to the invention. However, as shown in the examples below, this is not the case. If the coconut oil is incorporated into a polymer, coconut oil does not show an antimicrobial effect.

In contrast to coconut oil, a natural oil comprising a high content of fatty acid residues having 15 carbon atoms or more, such a linseed oil, and which is incorporated into a polymer matrix shows an excellent antimicrobial effect.

Thus, according to the present invention the amount of fatty acid residues having 15 carbon atoms or more must be at least 25 wt.-% based on the total weight of fatty acids present in the natural oil. Amounts of at least 30 wt.-%, at least 40 wt.-%, at least 50 wt.-%, at least 60 wt.-%, or at least 70 wt.-% based on the total the total weight of fatty acids present in the natural oil are particularly preferred.

Preferably the amount of fatty acid residues having 15 carbon atoms or more is between 35 and 98 wt.-%, between 45 and 95 wt.-%, between 55 and 90 wt.-%, more preferred between 65 and 85 wt.-%, based on the total weight of fatty acids present in the natural oil.

In one embodiment of the invention it is preferred that in the natural oil the amount of fatty acid residues having a number of carbon atoms of 12 or lower is less than 40 wt.-%, preferably less than 30 wt.-%, less than 25 wt.-%, less than 15 wt.-%, based on the total weight of fatty acids present in the natural oil. Preferably, the amount of fatty acid residues having a number of carbon atoms of 12 or lower is between 0 and 40 wt.-%, 2 and 35 wt.-% and more preferably between 5 and 20 wt.-%, based on the total weight of fatty acids present in the natural oil.

The type of the fatty acid residue and content thereof, which is present in the natural oil, can be determined by a gas chromatography method as described in American Oil Chemists' Society (AOCS) Ce 2-66. The glyceride and free fatty acids present in the natural oil are trans-esterified to fatty acid methyl esters and afterwards separated by their size and degree of saturation by the GC column and protocol as described in AOCS Ce 2-66.

The term "natural oil", as used herein, corresponds to the term "organic oil" sometimes used in the art. Usually, a natural oil is produced by plants, animals and other organisms through natural metabolic process. The term "natural oil", as used herein, does not encompass mineral oils, also called crude oils or petroleum, which are produced by geochemical processes. Natural oils contain glycerine esters with fatty acid residues, also indicated as glycerol esters with fatty acid residues or glycerides, steroids and/or similar chemical compounds produced by a living organism.

Hence, the term "natural oil", as described herein, refers to the natural oil as such, i.e. which may include all compounds that are usually present in a natural oil obtained from a plant, animal or another living organism but without any further additives that might be added to the natural oil for further use.

Nevertheless, additives, such as emulsifiers, stabilizers, binders, dispersants, pigments etc., may be added to the natural oil, as described herein. Which type of additive is added to the natural oil depends on the further use of the natural oil.

The main compounds of the natural oil are esters of glycerine with fatty acids having different carbon chain lengths. Usually, tri-esters of glycerine with the fatty acids are present in the natural oil, whereby the fatty acid residues of the glycerine ester can be the same or different.

The natural oil according to the invention may comprise fatty acid residues in the form of mono-, di-, or tri-esters of glycerine, whereby it is preferred that the fatty acid residues are present in the natural oil in the form of tri-glycerides. The fatty acid residues of the glycerine esters present in the natural oil can be the same or different.

The natural oils used in the invention can be produced by plants, animals or other organisms through natural metabolic process or synthetically. Preferably, the natural oil is obtained from plants or seeds of the plants by warm or cold press processes and/or solvent extraction methods commonly used in the art.

The terms "fatty acid" and "fatty acid residue", as used herein, refers to a carboxylic acid having a hydrocarbon chain. The number of C-atoms of the fatty acid and residue thereof can be in the range from 1 to 40 C-atoms, preferably 1 to 26 C-atoms or 1 to 20 C-atoms. Even more preferably the number of C-atoms is at least 6, at least 10 or at least 15. More preferably the number of C-atoms is in the range of 8 to 40, 8 to 26, 8 to 20, 12 to 40, 12 to 26, 15 to 40, 15 to 26, 15 to 20, 18 to 40, 18 to 26, or 18 to 20.

The hydrocarbon chain of the fatty acids and residues thereof can be saturated or unsaturated. In contrast to saturated fatty acids and residues thereof, which do not contain a double bond in their hydrocarbon chain, unsaturated fatty acids and residues thereof comprise one or more double bounds in their hydrocarbon chain, indicated as mono- or polyunsaturated fatty acids (residues). These double bonds can be *cis* or *trans* configured. Moreover, the hydrocarbon chain of the fatty acids and residues as described herein can be linear or branched.

In the present invention, the natural oil comprises saturated and/or unsaturated fatty acid residues.

The natural oil according to the present invention preferably comprises at least 10 wt.-% of unsaturated fatty acid residues, more preferably at least 25 wt.-%, at least 35 wt.-% and at least 50 wt.-% and preferably less than 98 wt.-%, less than 90 wt.-%, less than 85 wt.-%, less than 70 wt.-%, less than 65 wt.-% of unsaturated fatty acid residues based on the total weight of fatty acids present in natural oil.

Moreover, it is preferred that the natural oil comprises polyunsaturated fatty residues which are at least di- or tri-unsaturated.

In particular it is preferred that natural oil comprises a mixture of at least two different fatty acid residues which are selected from the group of saturated, mono-, di- and tri-unsaturated fatty acid residues.

It is preferred that the amount of polyunsaturated fatty acid residues is at least 10 wt.-%, preferably in the range of 10 to 90 wt.-%, 15 to 85 wt.-%, 20 to 80 wt.-%, more preferably 25 to 75 wt.-% based on the total weight of fatty acids present in the natural oil.

In one embodiment it is preferred that the amount of mono-unsaturated fatty acid residues is between 5 and 30 wt.-%, 5 and 35 wt.-%, 10 and 35 wt.-%, 10 and 25 wt.-% based on the total weight of fatty acids present in the natural oil.

In another embodiment it is preferred that the amount of di-unsaturated fatty acid residues is in a range of 5 to 30 wt.-%, 5 to 35 wt.-%, 10 to 35 wt.-%, 10 to 25 wt.-% based on the total weight of fatty acids present in the natural oil.

It is also preferred that the amount of tri-unsaturated fatty acid residues is at least 20 wt.-%, at least 30 wt.-%, at least 40 wt.-%, at least 45 wt.-%, at least 50 wt.-% at least 55 wt.-% and less than 80 wt.-%, less than 75 wt.-%, less than 70 wt.-%, based on the total weight of fatty acids present in the natural oil.

In one embodiment of the invention it is preferred that the natural oil as described herein has an iodine value in a range of 15 to 185, in particular it is preferred that the range is between 30 and 180, between 50 and 180, between 100 and 180, even more preferred between 120 and 180.

The iodine value, also indicated as "iodine adsorption value" or "iodine number" or iodine index" refers to the mass of iodine in grams that is consumed by 100 grams of a chemical substance. With respect to oils the iodine value is a measure of the content of unsaturated fatty acid residues present in the oil. The higher the iodine value, the more carbon-carbon double bonds are present in the oil.

The amount of the saturated fatty acid residues in the natural oil is preferably in a range of 1 to 90 wt.-% based on the total weight of fatty acids present in the natural oil. It is more preferred that the amount of the saturated fatty acid residues is in the range of 2 to 55 wt.-%, even more preferred of 5 to 45 wt.-%, 10 to 25 wt.-% based on the total weight of the fatty acids present in the natural oil.

Preferably, the fatty acids, which form with the glycerine esters, and thus mainly present in the natural oil of the invention as fatty acid residues, are selected from the group consisting of caproic acid, caprylic acid, capric acid, myristoleic acid, palmitoleic acid, sapienic acid, oleic acid, elaidic acid, vaccenic acid, linoleic acid, linoelaidic acid, α-linolenic acid, arachidonic acid, palmitic acid, stearic acid, lauric acid, myristic acid and/or combinations thereof. In particular it is preferred that the fatty acids are selected from the group consisting of palmitoleic acid, sapienic acid, oleic acid, elaidic acid, vaccenic acid, linoleic acid, linoelaidic acid, α-linolenic acid, arachidonic acid, palmitic acid, stearic acid, and/or combinations thereof. In another embodiments of the invention, the fatty acid can be di- or trifunctional and is selected from the list consisting of adipic acid, fumaric acid, isophthalic acid, maleic acid, phthalic acid, succinic acid, citric acid and/or combinations thereof. In a further embodiment, the fatty acid is an anhydride of the above named fatty acids.

Moreover, the natural oil of the invention may comprise esters of glycerine with other carboxylic acids, such as ascorbic acid, acetic acid, propionic acid, benzoic acid or lactic acid, and/or esters of polyalcohol with fatty acids as described herein. Suitable poly-alcohols may be di-, penta- or hepta-alcohols but also sugars can react with fatty acids to esters which may be present in the natural oil as described herein.

It is further preferred that the natural oil has a saponification value of 100 to 240, preferably of 125 to 220, more preferably of 150 to 200, in particular it is preferred that the value is between 180 and 196.

The saponification value, also indicated as "saponification number", "Koettstorfer number or "sap", represents the number of milligrams of potassium hydroxide required to saponify 1 g of oil under test conditions as described in the standard measurement methods JIS K 0070, ASTM D 5558, ASTMD D 94, DIN 51559 or ISO 3657. It is a measure of the average molecular weight (or chain length) of all the fatty acids present in the oil. Since most of the mass are triglycerides it allows a comparison of the average fatty acid chain length. The long chain fatty acids found in oils have a low saponification value because they have relatively fewer number of carboxylic functional groups per unit mass of the fat as compared to short chain fatty acids. With respect to soaps the saponification number represents the number of milligrams of sodium hydroxide required to saponify 1 g of oil. To convert potassium hydroxide values to sodium hydroxide values the potassium hydroxide values have to be divided by the ratio of the molecular weights of KOH and NaOH, i.e. divided by 1.403.

Preferably, the natural oil of the invention is selected from the group consisting of tung oil, linseed oil, sunflower oil, safflower oil, walnut oil, soybean oil, fish oil, corn oil, dehydrated castor oil, rapeseed oil, cumin oil, flax oil, vernonia oil and/or mixtures thereof. Linseed oil, sunflower oil, rapeseed oil, soybean oil, safflower oil, walnut oil, fish oil, corn oil, being particularly preferred. The use of coconut oil in the invention is excluded. Most preferred according to the invention is the use of linseed oil.

Linseed oil is also known as flaxseed oil or flax oil. This oil can be obtained from dried, ripened seeds of the flax plant (*Linum usitatissimum*) by pressing the seeds, sometimes followed by solvent extraction. In a common linseed oil the fatty acids, which are present as fatty acid residues in the oil, are: tri-unsaturated alpha-linoleic acid (51.9-55.22 wt.-% based on the total weight of fatty acids present in the natural oil), saturated palmitic acid (about 7 wt.-% based on the total weight of fatty acids present in the natural oil), saturated stearic acid (3.4-4.6 wt.-% based on the total weight of fatty acids present in the natural oil), mono-unsaturated oleic acid (18.5-22.6 wt.-% based on the total weight of fatty acids present in the natural oil) and di-unsaturated linoleic acid (14.2-17 wt.-% based on the total weight of fatty acids present in the natural oil).

Moreover, the natural oil, as described herein, may be used in combination with other oils such as lavender oil or peppermint oil. In one embodiment, the natural oil comprises lavender oil and/or peppermint oil.

It has been further found that in order to obtain an antimicrobial effect on the surface of the polymer which is of industrial interest, it is preferred that the polymer comprises at least 10 wt.-% of the natural oil, as described herein, based on the total weight of the polymer. Preferably the amount of the natural oil is at least 15 wt.-%, at least 25 wt.-% at least 50 wt.-%, based on the total weight of the polymer. More preferably, the amount of natural oil is between 10 and 90 wt.-%, more preferably between 15 and 85 wt.-%, even more preferred between 20 and 80 wt.-%, most preferred between 25 and 75 wt.-%, based on the total weight of the polymer.

The term "total weight of the polymer" as used herein refers to the weight of the polymer including the natural oil incorporated into its matrix.

The term "polymer", as used herein, refers to a compound formed (polymerized) by two or more small molecules, indicated as components or units of the polymer.

The term "polymer matrix" refers to the organized structure of the polymer wherein other compounds/compositions can be incorporated. Due to the organized structure of the matrix the compounds/compositions are commonly present in the polymer matrix in a stable position. However, it is also possible that the incorporated compounds/compositions migrate through the polymer matrix. It is further possible that the compounds/compositions migrate for example to the surface of the polymer and thus only after a certain time the compounds/compositions are placed in a specific position.

In general, and which is in accordance with the invention, the polymer matrix is considered as continuous phase and the compounds / compositions, which are incorporated into the matrix, are considered as dispersed phase.

The incorporation of the natural oil into the polymer matrix can e.g. be achieved by mixing the natural oil with the polymer in order to obtain a dispersion or a compound of the natural oil with the polymer. Said dispersion or compound can then e.g. be submitted to injection molding or extrusion for forming the polymer matrix. In case the polymer is not liquid at room temperature, the polymer can be melted before the polymer is mixed with the natural oil and/or the polymer can be melted during this mixing at a sufficient temperature which is high enough that the polymer melts but low enough that natural oil and/or the polymer is not decomposed.

Alternatively, the single components of the polymer can be mixed with the natural oil before the polymerization of the polymer is carried out.

Moreover, the antimicrobial properties of the natural oil incorporated into the polymer matrix are provided in liquid form as well as after the mixture/dispersion of the natural oil with the polymer have been cured.

The resulting polymer comprising the natural oil can e.g. be submitted to compounding processes, pressureless processing techniques (e.g. casting, dipping, coating, foaming) or compression molding, rolling and calendaring, extrusion, blow molding or injection molding processes or drawing, thermoforming or printing for forming a polymer body. The resulting polymer body as described herein can also be obtained by drylaid, airlaid, spunlaid/meltblown or wetlaid processes, in particular if the polymer is for use as fiber material or non-woven material.

According to the present invention the polymer comprising the natural oil can be a single polymer or a mixture of at least two different polymers, as for example described below.

In one embodiment of the invention the polymer is an alkyd resin.

The term "alkyd resin", as used herein, refers to a polyester modified by the addition of fatty acids and/or other components. Alkyd resins are derived from a di-, tri- or polyol and a di-, tri- or polycarboxylic acid or carboxylic acid anhydride. The monomers as such are not encompassed by the term "alkyd resin".

The di-, tri- or polyacid can for example be selected from the group consisting of oxalic acid, malonic acid, succinic acid, glutaric acid, adipic acid, pimelic acid, suberic acid, azelaic acid, cebacic acid, maleic acid, fumaric acid, glutaconic acid, malic acid, aspartic acid, glutamic acid, tartaric acid, phthalic acid, isophthalic acid, terephthalic acid and/or mixtures thereof. Anhydrides of these acids are also suitable. Preferably, the acid residue in the polyester is a diacid residue.

The di-, tri- or polyalcohol can for example be selected from the group consisting of ethylene glycol, butylene glycol, pentanediol, neopentyl glycol, hexylene glycol, diethylene glycol, dipropylene glycol, triethylene glycol, glycerol, trimethylolethane, trimethylopropane, pentaerythritol, methylglucoside, sugars, sugar alcohols, such as mannitol, xylitol and sorbitol and/or mixtures thereof.

The polyester backbone in the alkyd resin can be modified by any organic residue, preferably a hydrophobic residue, more preferably a hydrophobic residue which does not contain any additional reactive groups as defined below. Preferably, the polyester is modified with an acid residue, more preferably with a fatty acid as defined with respect to the natural oil of the invention.

In one embodiment, the alkyd resin is a linear polyester. A linear polyester, as defined herein is a difunctional molecule and has two reactive sites.

In another embodiment, the alkyd resin is a branched polyester containing fatty-acid side groups. A branched polyester, as defined herein is a tri-, tetra-, or higher functional molecule and has three, four, or more reactive sites. Branched polyester may form, as linear polyester, molecular chains, but, in addition, branching connections are formed, which result in a three-dimensional network (cross-linking).

The alkyd resin may further comprise additives for example fatty acids, in particular those as described above, oct-1-en-3-ol, citronellal and pheromones of clothing mots, such as for example (Z, E)-tetradeca-9,12-dienyl acetate.

In one embodiment, the alkyd resin is a drying or a non-drying alkyd resin.

Drying alkyd resins cure at approximately 20°C or by drying at 60°-80°C. Non-drying alkyd resins do not dry at these temperatures, but are cured by baking.

In one embodiment, the alkyd resin further comprises a siccative (oil-drying agent), which catalyzes the curing of the alkyd resins. Siccatives are typically derived from cobalt, manganese and iron ions.

In another embodiment, the alkyd resin does not contain any siccatives.

In case the natural oil is incorporated in an alkyd resin as polymer the amount of oil based on the total weight of the alkyd resin classifies the resulted polymer. In case the amount of the natural oil is higher than 60 wt.-% the polymer is indicated as long-oil alkyd resin, in case the amount of the oil is between 40 wt.-% and 60 wt.-% the polymer is indicated as medium-oil alkyd resin, and in case the amount of the oil is lower than 40 wt.-% the polymer is indicated as short-oil alkyd resin. All amounts are based on the total weight of the alkyd resin. In a preferred embodiment the alkyd resin is a medium-oil alkyd resin or a long-oil alkyd resin.

In one embodiment the alkyd resin is WorléeKyd B 845 (Worlée-Chemie GmbH, Germany), Setal 196 XX (Nuplex, USA, Kentucky) or Alkydal F26 XX, Alkydal F251 X (Covestro, Germany).

It is preferred that the alkyd resin, as described herein, provides in addition to the natural oil antimicrobial properties.

The term "in addition", "additionally" as used herein has the meaning of "simultaneously" and/or "sequentially".

In other embodiment the polymer, as described herein, the polymer is a thermoplastic polymer, an elastomer, a thermoplastic elastomer, a duroplast or a mixture thereof.

The term "thermoplastic", as used herein, refers to a polymer that becomes pliable or moldable above a specific temperature and solidifies upon cooling. Examples for thermoplastic polymers include but are not limited to polyacrylates, acrylonitrile-butadiene-styrenes, polyamides such as nylon, polyacetic acid, polybenzimidazole, polycarbonate, polyether sulfone, polyetherether ketone, polyetherimide, polyethylene, polyphenylene oxide, polyphenylen sulfide, polypropylene, polystyrene, polyvinylchloriode, polyethyleneterephthalate, polyurethane, polyester and polytetrafluoroethylene (e.g. Teflon).

The term "elastomer", as used herein, refers to a polymer with viscoelasticity (having both viscosity and elasticity). Examples for elastomers include but are not limited to unsaturated rubbers such as natural polyisoprene (natural rubber), synthetic polyisoprene, polybutadiene, chloroprene rubber, butyl rubber, styrene-butadiene rubber, (hydrogenated) nitrile rubber, saturated rubbers such as ethylene propylene rubber, ethylene propylene diene rubber, epichlorohydrin rubber, polyacrylic rubber, silicone, silicone rubber, fluorosilicone rubber, fluoro- and perfluoroelastomers, and ethylene-vinyl acetate.

The term "thermoplastic elastomer", as used herein, refers to a class of copolymers or a physical mix of polymers which consists of materials with both thermoplastic and elastomeric properties. Examples for thermoplastic elastomers include but are not limited to styrenic block copolymers, polyolefin blends, elastomeric alloys, thermoplastic polyurethanes, thermoplastic copolyester, and thermoplastic polyamides.

The term "duroplast", as used herein, refers to a polymer which is no longer pliable after curing. Examples for duroplasts include but are not limited to aminoplasts, phenoplasts, epoxy resins, polyacrylates, polyurethanes, polyesters, urea formaldehyde resins, melamine formaldehyde resins, and phenol formaldehyde resins.

In a more preferred embodiment of the present invention, the polymer is selected from the group consisting of polypropylene, polyethylene, polyethyleneterephthalate, polyester, polyamide, polyurethane, polyacrylate, polycarbonate, polystyrene, polyimides, polymethacrylates, polyoxoalkylenes, poly(phenylene oxides), polyvinylesters, polyvinylethers, polyvinylidene chloride, acrylonitrile-butadiene-styrene, natural and synthetic polyisoprene, polybutadiene, chloroprene rubber, styrene-butadiene rubber, tetrafluoroethylene, silicone, acrylate resins, polyurethane resins, silicone resins, polyester resins, alkyd resins, epoxy resins, phenolic resins, and urea or amine based resins, or a mixture thereof.

Further examples of polymers are polyolefins, such as polyethylene and polypropylene, or melamine resins (melamine-formaldehyde resins). Melamine-formaldehyde resins form via the condensation of formaldehyde with melamine.

In one embodiment is mixed a melamine resin is mixed with the alkyd resin, as described above. In these mixture the amount of the alkyd resin is in the range of 10 to 90 wt.-% and the amount of the melamine resin is in the range of 10 to 90 wt.-% based on the total weight of the two resins. In a preferred embodiment, the alkyd resin is in the range of 50 to 90 wt.-% and the amount of the melamine resin is in the range of 10 to 50 wt.-% based on the total weight of the two resins. Particularly preferred, the alkyd resin is about 70 wt.-% and the amount of the melamine resin is about 30 wt.-% based on the total weight of the two resins. An example of a suitable melamine resin is Maprenal MF 900 (INEOS Melamines GmbH, Germany). It was found that the combination of an alkyd resin with a melamine resin improves surface hardness and scratch resistance and reduces curing time.

In one embodiment, the natural oil additionally reduces the growth of a biofilm on the surface of the polymer.

The term "biofilm", as used herein, refers to an assembly of microorganisms wherein cells stick to each other on the surface of a polymer. The term "growth of biofilm" or "biofilm growth", as used herein, refers to the microorganism built-up adhering to a surface of a polymer.

The term "reduction of the growth of a biofilm", as used herein, refers to the decrease, preferably the inhibition, of the microorganism built-up on a long term scale, i.e. at least 1 week, preferably at least 1 month, more preferably at least 1 year, even more preferably at least 3 years, on the surface of a polymer comprising the natural oil as described herein compared to the surface of a polymer not comprising the natural oil as described herein.

In one embodiment, the natural oils as described herein are particularly suitable for simultaneously imparting antimicrobial properties to a surface of a polymer and reducing, particularly inhibiting, the growth of a biofilm on the surface of the polymer, thereby reducing, preferably inhibiting, the growth of biofilm on a polymer surface and maintaining the microbial efficacy of the natural oil on a long term time scale (at least 2 weeks, preferably at least 1 month, more preferably at least 1 year, even more preferably at least 3 years).

A particular advantage of the use according to the present invention is the finding that the natural oil itself provides the desired antimicrobial effect in case the natural oil is incorporated in a polymer matrix and thus there is no need that the polymer comprises any further biocidally acting compound. Therefore, in a particularly preferred embodiment of the present invention the polymer is free of any additional antimicrobial compound. In particular, the polymer used in the present invention typically does not contain any nanoparticles, such as metal nanoparticles, in particular silver nanoparticles. Preferably the polymer is free of silver, organotin and gum rosin.

In a further embodiment the polymer according to the present invention does not contain any internal biocides, preferably the natural oil does not contain any internal biocides and any external biocides. In this context "internal biocides" are understood as compounds having biocidal activity, which are chemically bound to the polymer such as e.g. a gum rosin or a organotin compound. "External biocides" are to be understood as those biocidal compounds which are present in the polymer, are not chemically bound to the polymer.

The polymer comprising the natural oil, as described herein, can be used in liquid form but also in cured form and can be one or more parts of e.g. materials, additives, surface layers, inner layers, coating layers, protective layers, exterior, interior, etc., which are used in various applications.

These applications can be selected from the group consisting of: a polymer body, a paint, a varnish, a coating, an ink, glass fibers and an inorganic oxide material, containers for storage of drinking water (e.g. in the beverage industry), waste water, or surface water; containers for waste decomposition; containers for water purification; hospitals, medical equipment and devices, wound dressings, diapers, household appliances, water boilers, heating systems, slaughterhouses, ships, boats, roof coverings, roof tiles, indoor tiles, outdoor tiles, kitchen rooms, sinks, bathroom equipment, wash closets, toilets, portable toilets, ceramics, polymers, fibers, rain water sewers, exterior façades, elements of façades, pools, pumps, tubing, walls, floorings, laminates, technical textiles, activewear fabrics, textile fibres, paper, wood, apparatus for air and water purification, apparatus for soil decontamination, window glass (e.g. self-cleaning windows), mirrors (e.g. anti-fog coatings for mirrors and/or glass), filter materials such as nonwovens, respirator masks, air filters, such as air-conditioner filters, water filters, and activated-carbon filters for water, air purification, and/or (food) packaging.

The abbreviation "wt.-%" or "w/w", as used herein, means "weight percentage" and refers to the weight amount of a compound in relation to the (total) weight of a composition of compounds or of a substrate if nothing else is explicitly stated or obvious under the circumstances.

## Examples

The value of the antimicrobial activity (R-value) is calculated as follows:

$$R = \log (B/A) - \log (C/A)$$

| A | mean value of colony-forming unit (CFU) of untreated surfaces, directly after application (0 h) |
|---|---|
| B | mean value of colony-forming unit (CFU) of untreated surfaces, after incubation (24 h, 36 °C, 90% relative humidity (rH)) |
| C | mean value of mean colony-forming unit (CFU) of treated surfaces, after incubation (24 h, 36 °C, 90% relative humidity (rH)) |

The percentages of oil in the examples are wt.-% based on the total weight of the dried polymer matrix after curing and/or removal of solvent, unless indicated otherwise.

### Example 1

The antimicrobial effect of a commercial available linseed oil was tested.

The linseed oil was incorporated into polypropylene (Hostacom) obtained from LyondelIBaseII in an amount of 10 wt.-% by mixing linseed oil with the polypropylene at 200 °C. Afterwards, the obtained mixture was pressed to plates having a size of 5x5 cm at a temperature of 200 °C and a pressure of 200 bar.

Moreover, the antimicrobial effect of linseed oil was tested by incorporating the linseed oil into alkyd resins as polymers (WorleeKyd B 845, WorleeSOL E330 obtained from Worlee-Chemie GmbH) in an amount of 15 wt.-%. The antimicrobial tests were performed on glass-plates having a size of 5x5 cm.

The microorganism tested for was the gram-positive bacterium Staphylococcus aureus (DSM 799).

The results are summarized in the following table 1:

Table 1

| Sample | CFU / cm$^2$ [mean of three tests] | | R-value |
| --- | --- | --- | --- |
| | after 0 hours | after 24 hours | |
| PP blank value | $8.5 \times 10^6$ | $3.1 \times 10^7$ | --- |
| PP + 10 % linseed oil | --- | $1.8 \times 10^7$ | 0.24 |
| WorleeKyd B 845 + 15 % linseed oil | --- | 33 | 5.96 |
| WorleeSol E330 + 15 % linseed oil | --- | 25 | > 6.09 |

It can be seen from the above table that an amount of at least 10 % linseed oil is sufficient to show a recognizable antimicrobial effect in polypropylene and an amount of 15 % linseed oil shows an excellent antimicrobial effects in alkyd resins.

**Example 2**

In Example 2 an antimicrobial effect of commercial available linseed oil in comparison to a commercial available coconut oil was tested.

Both natural oils were incorporated in a polymer mixture (2K-PUR-system) consisting of polyacrylate WorleeCryl A1220 obtained from Worlee-Chemie GmbH and polyurethane Desmodur N 75 obtained from Covestro AG. The amount of each oil used in the samples was 50 wt.-% based on the weight of the polymer mixture.

The three tested samples contain:

1. WorleeCryl A1220 + Desmodur N 75 (indicated as "Blind"):

WoreleeCryl A 1220     10.00 g
Desmodur N 75            1.80 g
Butylacetat              2.48 g

2. WorleeCryl A1220 + Desmodur N 75 + Linseed oil 50 %:

WoreleeCryl A 1220     10.00 g
Desmodur N 75            1.80 g
Butylacetat              2.48 g
Linseed oil              2.10 g

3. WorleeCryl A1220 + Desmodur N 75 + Coconut Oil 50 %:

WoreleeCryl A 1220     10.00 g
Desmodur N 75            1.80 g
Butylacetat              2.48 g
Coconut oil              2.10 g

The antimicrobial tests were performed on glass-plates having a size of 5x5 cm.

The microorganism tested for was the gram-positive bacterium Staphylococcus aureus (DSM 799).

The results are summarized in the following table 2:

Table 2

| Sample | CFU / cm$^2$ [mean of three tests] | | R-value |
| --- | --- | --- | --- |
| | after 0 hours | after 24 hours | |
| WorleeCryl A1220 + Desmodur N75 - blank value | $1.3 \times 10^8$ | $1.2 \times 10^8$ | --- |
| WorleeCryl A1220 + Desmodur N75 + 50% coconut oil | --- | $1.2 \times 10^7$ | -0.10 |
| WorleeCryl A1220 + Desmodur N75 + 50 % linseed oil | --- | < 17 | > 6.84 |

It can be seen from the above table that linseed oil shows a remarkable antimicrobial effect even after 24 hours.

**Claims**

1. Use of a natural oil for providing antimicrobial properties to at least part of a surface of a polymer wherein the natural oil is incorporated into the polymer matrix and comprises at least 25 wt.-% of fatty acid residues having at least 15 carbon atoms, based on the total weight of fatty acids present in the natural oil.

2. Use of the natural oil according to claim 1, wherein the antimicrobial properties include antibacterial, disinfecting, antifouling and/or self-sanitizing properties.

3. Use of the natural oil according to claims 1 or 2, wherein the natural oil additionally reduces the growth of a biofilm on the surface of the polymer.

4. Use of the natural oil according to any of the preceding claims, wherein the polymer does not contain any other internal or external biocidal compound, preferably no other internal biocidal compound.

5. Use of the natural oil according to any of the preceding claims, wherein the polymer comprises at least 10 wt.-%, preferably at least 25 wt.-%, most preferably at least 50 wt.-% of the natural oil, based on the total weight of the polymer including the natural oil incorporated in its matrix.

6. Use of the natural oil according to the preceding claims, wherein the fatty acid residues are present in the natural oil in form of mono-, di-, and/or tri-glycerides, preferably in form of tri-glycerides.

7. Use of the natural oil according to any of the preceding claims, wherein the fatty acid residues are saturated and/or unsaturated fatty acid residues.

8. Use of the natural oil according to any of the preceding claims, wherein the natural oil has a saponification value (KOH) of 100 to 240.

9. Use of the natural oil according to any of the preceding claims wherein the natural oil is selected from the group consisting of tung oil, linseed oil, sunflower oil, safflower oil, walnut oil, soybean oil, fish oil, corn oil, dehydrated castor oil, rapeseed oil, cumin oil, flax oil, vernonia oil and mixtures thereof; preferably linseed oil.

10. Use of the natural oil according to any of the proceeding claims, wherein the polymer is a single polymer or a mixture of two or more different polymers.

11. Use of the natural oil according to any of the preceding claims, wherein the polymer is selected from the group consisting of alkyd resins, thermoplastic polymers, a thermoplastic elastomers, duroplasts, elastomers and combination thereof.

12. Use of the natural oil according to claim 11, wherein the polymer is selected from the group consisting of polypropylene, polyethylene, polyethyleneterephthalate, polyester, polyamide, polyurethane, polyacrylate, polycarbonate, polystyrene, polyimides, polymethacrylates, polyoxoalkylenes, poly(phenylene oxides), polyvinylesters, polyvinylethers, polyvinylidene chloride, acrylonitrile-butadiene-styrene, natural and synthetic polyisoprene, polybutadiene, chloroprene rubber, styrene-butadiene rubber, tetrafluoroethylene, silicone, acrylate resins, polyurethane resins, silicone resins, polyester resins, alkyd resins, epoxy resins, phenolic resins, and urea or amine based resins, or a mixture thereof; preferably the polymer is an alkyd resin.

13. Use of the natural oil according to any of the preceding claims, wherein the polymer comprises between 10 wt.-% and 90 wt.-%, preferably between 15 to 85 wt.-% of the natural oil, based on the total weight of the polymer including the natural oil incorporated in its matrix.

14. Use of the natural oil according to any of the preceding claims, wherein the natural oil is incorporated into the polymer matrix by mixing the natural oil with the polymer and afterwards the mixture is submitted to injection molding or extrusion for forming the polymer matrix.

15. Use of the natural oil according to any one of the proceeding claims, wherein the polymer is used in paint, varnish, coating, ink, glass fibers and/or an inorganic oxide material applications.

Europäisches
Patentamt

European
Patent Office

Office européen
des brevets

# EUROPEAN SEARCH REPORT

Application Number

EP 17 17 4344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FERHAT YÜCEDAG ET AL: "Antibacterial oil-based polyurethane films for wound dressing applications : Oil-Based PU Films for Wound Dressing", JOURNAL OF APPLIED POLYMER SCIENCE, vol. 115, no. 3, 5 February 2010 (2010-02-05), pages 1347-1357, XP055390495, US ISSN: 0021-8995, DOI: 10.1002/app.30788 * abstract * * Antibacterial performance; page 1354 - page 1356 * | 1-15 | INV. A01N25/12 A01N37/12 A01N65/00 A01N63/00 A01N65/08 A01P1/00 |
| X | SHARMIN ET AL: "Synthesis, characterization, antibacterial and corrosion protective properties of epoxies, epoxy-polyols and epoxy-polyurethane coatings from linseed and Pongamia glabra seed oils", INTERNATIONAL JOURNAL OF BIOLOGICAL MACROMOLECU, ELSEVIER BV, NL, vol. 40, no. 5, 23 February 2007 (2007-02-23), pages 407-422, XP005901891, ISSN: 0141-8130, DOI: 10.1016/J.IJBIOMAC.2006.10.002 * abstract * * 3.6 Antibacterial behaviour; page 421 * * 3.4 Coating properties; page 415 - page 418 * | 1-15 | |

TECHNICAL FIELDS SEARCHED (IPC)

A01N

The present search report has been drawn up for all claims

| Place of search | Date of completion of the search | Examiner |
|---|---|---|
| Munich | 13 July 2017 | Davies, Maxwell |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0071183 A

**Non-patent literature cited in the description**

- *Alternative & Complementary Therapies,* December 2006, 310-314
- **LIEBERMAN et al.** *Inform,* June 2014, vol. 25 (6), 390-393
- **A-MATHKHURY et al.** *Iraqi Journal of Science,* 2016, vol. 57 (2B), 1086-1095